(19) Europäisches Patentamt
European Patent Office
Office européen des brevets

(11) **EP 2 044 341 B1**

(12) **EUROPÄISCHE PATENTSCHRIFT**

(45) Veröffentlichungstag und Bekanntmachung des Hinweises auf die Patenterteilung:
**18.05.2011 Patentblatt 2011/20**

(21) Anmeldenummer: 07786312.4

(22) Anmeldetag: **25.07.2007**

(51) Int Cl.:
***F16B 39/12*** *(2006.01)*

(86) Internationale Anmeldenummer:
**PCT/EP2007/006586**

(87) Internationale Veröffentlichungsnummer:
**WO 2008/012074 (31.01.2008 Gazette 2008/05)**

(54) **SICHERUNGSMUTTER**

SAFETY NUT

ÉCROU DE BLOCAGE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **25.07.2006 DE 102006034229**
**11.07.2007 DE 102007032629**

(43) Veröffentlichungstag der Anmeldung:
**08.04.2009 Patentblatt 2009/15**

(73) Patentinhaber: **Winker Massivumformung GmbH & Co. KG**
**78549 Spaichingen (DE)**

(72) Erfinder:
• **WINKER, Alexander**
**78549 Spaichingen (DE)**
• **REICHELT, Helmut**
**73770 Denkendorf (DE)**

(74) Vertreter: **Winter, Martina**
**Kirchstrasse 4/6**
**71364 Winnenden (DE)**

(56) Entgegenhaltungen:
**EP-A- 1 069 325     DE-A1- 10 144 034**

**Beschreibung**

Die vorliegende Erfindung betrifft eine Sicherungsmutter nach dem Oberbegriff des Patentanspruchs 1.

Sicherungs- oder Klemm-Muttern zeichnen sich dadurch aus, dass sie eine Sicherung oder einen Mechanismus gegen Lockern am Bolzen, an der Welle, der Schraube, etc. oder Verlieren aufweisen. Als Verliersicherung kann bspw. ein Kunststoffring am Mutternkörper vorgesehen sein. Eine weitere an sich bekannte Form der Verliersicherung besteht in einer Gewindedeformierung, die mit üblichen, dem Fachmann bekannten Herstellungsverfahren eingebracht werden kann. Der Kunststoffring darf nicht zu knapp bemessen bzw. die Gewindedeformierung zu stark sein, weil die Mutter sonst nicht mehr auf den Bolzen geschraubt werden kann. Dies hat zur Folge, dass die Sicherung zwar reversibel, die anwendbare Kraft aber begrenzt ist, so dass stärkere Erschütterungen zum Lockern der Mutter auf dem Bolzen führen können. Eine andere bekannte Mutter weist einen geschlitzten Hals mit einem Außengewinde auf, auf welches ein Spannring aufgeschraubt werden kann. Die Herstellung einer solchen Mutter ist jedoch umständlich und teuer. Eine weitere Lösung sieht vor, dass am Gewinde der Mutter ein Kragen und eine entsprechende Nut am Bolzen, an der Welle, Schraube, etc. angebracht wird, so dass beim Aufschrauben der Mutter der Kragen in die Nut gedrückt wird. Diese Verbindung ist zwar stabil, aber nicht mehr lösbar, also irreversibel. Die Fertigung der Teile mit Kragen und Nut ist außerdem kostenaufwendig.

Eine gattungsgemäße Sicherungsmutter ist aus der DE 101 44 034 A1 bekannt. Diese Sicherungsmutter weist einen Mutternkörper mit einem hohlen Hals auf, welcher ein Innengewinde und am Halsumfang Kreisprofile aufweist. Ferner ist ein Spannring vorgesehen, der entlang des Innenumfangs Kreiskeile aufweist, die sich über den gesamten Innenumfang erstrecken. Die Kreisprofile sind den Kreiskeilen zugeordnet und erstrecken sich jeweils über einen gleichen Winkel, der wesentlich kleiner ist als der Winkel des jeweils zugeordneten Kreiskeils. Der Spannring sitzt mit Spiel auf dem Hals des Mutternkörpers auf und ist über einen gewissen Winkelbereich, der von den Abmessungen der Kreiskeile bzw. Kreisprofile im Einzelfall abhängt, frei drehbar. Das Anziehen der Mutter und die anschließende Sicherung sind somit zwei völlig verschiedene, voneinander unabhängige Arbeitsgänge. Erst wenn die Mutter zuverlässig in ihrer gewünschten Position ist, wird sie durch Klemmung gesichert.

Aus der EP 1 069 325 A2 ist eine Schaft-Nabe-Verbindung mit einer Arretierung bei plastischer Verformung bekannt.

In der Praxis hat es sich gezeigt, dass es wünschenswert ist, während des Klemmvorgangs die erstrebte Endposition des Spannrings, d.h. den Endpunkt des Klemmvorgangs, bei dem die gewünschte Klemmkraft erreicht ist, zuverlässig und reproduzierbar festzustellen. Außerdem gibt es Anwendungsbereiche, bei denen eine zusätzliche Sicherung erwünscht ist.

Diese Ziele werden mit einer Sicherungsmutter mit den Merkmalen des Patentanspruchs 1 erreicht. Erfindungsgemäß ist vorgesehen, dass mindestens ein Kreiskeil mindestens einen Rastbereich aufweist und dass mindestens ein Kreisprofil mindestens eine korrespondierende Vertiefung aufweist; bzw. dass mindestens ein Kreiskeil mindestens eine Vertiefung aufweist und dass mindestens ein Kreisprofil mindestens einen korrespondierenden Rastbereich aufweist, die jeweils bei mit dem Mutternkörper verspannten Spannring rastend in Eingriff stehen.

Die Endposition des Spannrings, bei der mindestens ein Kreiskeil bzw. ein Kreisprofil mit seinem Rastbereich mit einer Vertiefung in Eingriff stehen, bspw. verrastet sind, lässt sich manuell oder automatisch erfassen. Dies ermöglicht nicht nur eine sichere und reproduzierbare Feststellung, dass der Klemmvorgang abgeschlossen ist, sondern erlaubt es auch, die Montage der erfindungsgemäßen Sicherungsmutter vollautomatisch vorzunehmen, da nun eine automatische Erkennung der Endposition physikalisch reproduzierbar messbar ist. Dies liegt daran, dass in dem Moment, in dem die Rastbereiche der Kreiskeile bzw. Kreisprofile und Vertiefungen miteinander in Eingriff kommen, eine minimalen Reduzierung der Klemmkraft erfolgt, die für die gewünschte Klemmwirkung unschädlich ist und mit Sensoren erfasst werden kann. Der Umstand, dass in der gewünschten Endposition die Rastbereiche der Kreiskeile bzw. Kreisprofile mit den korrespondierenden Vertiefungen miteinander in Eingriff stehen, führt auch zu einer zusätzlichen Sicherung der Klemmverbindung.

Vorteilhafte Weiterbildungen ergeben sich aus den Unteransprüchen. Vorzugsweise weist jeder Kreiskeil und jedes Kreisprofil mindestens ein derartiges mittel auf, um eine gleichmäßige Kraftverteilung über den Umfang des Spannrings bzw. des Halses zu gewährleisten.

Die Mittel können in besonders einfacher Weise als Rastbereiche bzw. Vertiefungen ausgebildet sein. Dabei sind zwei Alternativen frei wählbar. Entweder weisen der oder die Kreiskeile jeweils mindestens einen Rastbereich und das oder die Kreisprofile jeweils mindestens eine Vertiefung auf oder umgekehrt weisen der oder die Kreiskeile jeweils mindestens eine Vertiefung und das oder die Kreisprofile jeweils mindestens einen Rastbereich auf.

Vorzugsweise sind drei Kreiskeile und drei Kreisprofile vorgesehen, so dass sich für die Klemmung drei Berührungspunkte ergeben und der Hals des Mutternkörpers in Richtung eines etwa dreieckigen Querschnitts verformt wird. Damit erstreckt sich jeder Kreiskeil des Spannrings über einen Winkelbereich von 120°.

Eine weitere bevorzugte Weiterbildung sieht vor, dass sich jedes der drei Kreisprofile des Halses über einen Winkelbereich von 30 bis 60°, bevorzugt 40 bis 50°, besonders bevorzugt 45° erstreckt. Damit werden eine gute Wechselwirkung zwischen Kreiskeilen und Kreisprofilen und eine gute Klemmwirkung erzielt.

Während die Steigung der Kreiskeile des Spannrings vorzugsweise im Wesentlichen linear ist, ist es ferner von Vorteil, wenn die Steigung der Kreisprofile des Halses vor der Verklemmung bogenförmig und nach der Verklemmung annähernd linear ist. Dadurch erhält man eine breitere Auflagefläche zwischen Kreiskeilen und Kreisprofilen, wodurch Spannungsspitzen vermieden werden.

Die Steigung der Kreisprofile kann durch einen Kreisbogen erzeugt sein. Auch die Steigung der Kreiskeile kann aus praktischen Gründen durch einen Kreisbogen erzeugt sein, da sich ideale lineare Steigungen nur schwer herstellen lassen.

Die Steigung der Kreiskeile des Spannrings kann bspw. 1: 50 bis 1: 100, vorzugsweise 1:70, die Steigung der Kreisprofile des Halses bspw. 1:20 bis 1: 40, vorzugsweise 1: 25 betragen. Die Wandstärke des Halses entspricht vorzugsweise höchstens 10% des Innendurchmessers des Halses, so dass eine reversible Verformung des Halsquerschnittes möglich ist.

Die Tiefe der Kreiskeile des Spannrings und der Kreisprofile des Halses kann bspw. 1 bis 3 %, vorzugsweise 1,75 %, des Innendurchmessers des Spannrings betragen.

Der Mutternkörper einschließlich Hals der Sicherungsmutter kann ferner mit einem Innengewinde versehen sein.

Ausführungsbeispiele der vorliegenden Erfindung werden im Folgenden anhand der beigefügten Zeichnungen näher erläutert. Es zeigen in einer schematischen, nicht maßstabsgetreuen Darstellung:

Figur 1   ein erstes Ausführungsbeispiel einer erfindungsgemäßen Sicherungsmutter vor der Klemmung des Spannrings in einer Draufsicht;

Figur 2   ein weiteres Ausführungsbeispiel einer erfindungsgemäßen Sicherungsmutter vor der Klemmung des Spannrings in einer Draufsicht;

Figur 3   ein weiteres Ausführungsbeispiel einer erfindungsgemäßen Sicherungsmutter nach der Klemmung des Spannrings in einer Draufsicht;

Figur 4   einen Schnitt entlang der Linie IV - IV in Figur 3.

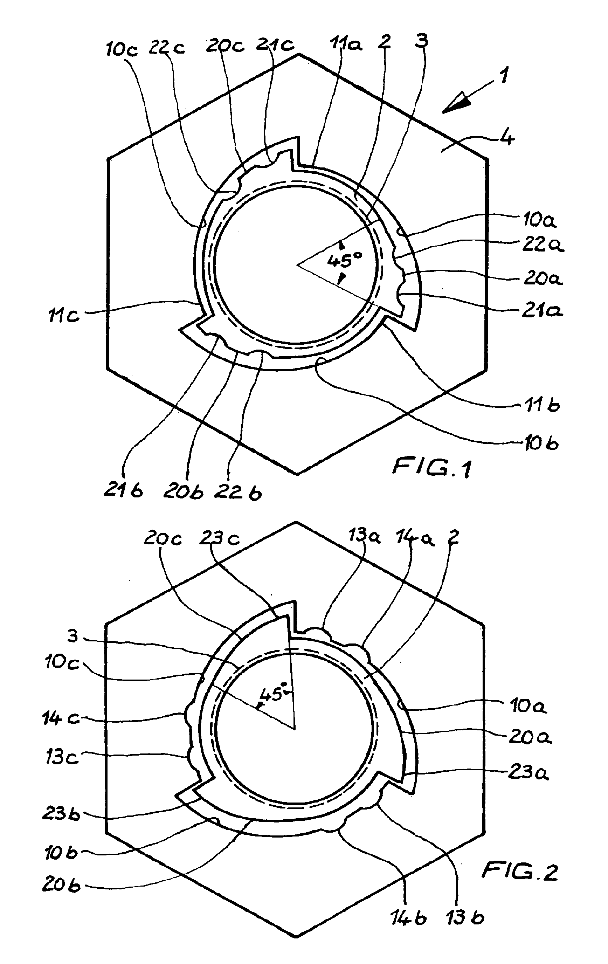

Ausführungsbeispiele einer erfindungsgemäßen Sicherungsmutter sind in den Figuren 1 und 2 schematisch dargestellt. Die Sicherungsmutter ist eine Weiterentwicklung der aus der DE 101 44 034 A1 bekannten Sicherungsmutter. Die Sicherungsmutter 1 besteht aus einem Mutternkörper 5 und einem Spannring 4. Der Mutternkörper 5 weist einen Hals 2 auf, auf welchen der Spannring 4 aufgeschoben wird. Der Mutternkörper 5 einschließlich dem Hals 2 ist entlang seiner Innenfläche mit einem Innengewinde 3 versehen. Der Mutternkörper 5 kann, je nach Verwendungszweck der Sicherungsmutter 1, eine beliebige Außenkontur aufweisen, bspw. einen Sechskant. Der Mutternkörper 5 kann auch mit einem Flansch versehen sein. Alle Bauteile sind aus Metall, jedoch ist auch die Verwendung von Kunststoffen denkbar.

Der Spannring 4 kann eine beliebige Außenkontur, im Ausführungsbeispiel einen Sechskant, aufweisen. Entlang seiner Innenfläche sind drei Nuten in Form von Kreiskeilen 10a, 10b, 10c angebracht. Jeder Kreiskeil erstreckt sich über einen Winkelbereich von 120°. Die Steigung der Kreiskeile 10a, 10b, 10c ist vergleichsweise gering, so dass sie praktisch als linear bezeichnet werden kann. Im Ausführungsbeispiel beträgt die Steigung 1 : 70 oder 3/10 mm bei einem Innendurchmesser von 19,2 mm. Die Bemessung des Innendurchmessers und der Steigung der Kreiskeile 10a, 10b, 10c hängt im Einzelfall von den Abmessungen der Sicherungsmutter 1 ab. Die Anzahl der Kreiskeile 10a, 10b, 10c sollte mindestens 2 betragen, kann aber auch größer sein.

Eine lineare Steigung wäre der Idealfall, eine derartige Kontur der Kreiskeile 10a, 10b, 10c ist jedoch schwer herstellbar. Praktisch kann die Kontur der Kreiskeile 10a, 10b, 10c durch einen Kreisbogen hergestellt werden, dessen Mittelpunkt gegenüber dem Mittelpunkt der Sicherungsmutter 1 verschoben ist. Die Berechnung dieses Kreisbogens kann mit den folgenden Formeln (I), (II), (III) vorgenommen werden:

$$(I) \qquad X_A = 0{,}5 \times g$$

$$(II) \qquad Y_A = (2/\sqrt{3} - \sqrt{3}/2) \times g$$

$$(III) \qquad R_A = R_0 + X_A$$

mit

$$R_0 = \text{Nennradius}, \quad g = \text{Steigung}$$

Mit $g = 0,3$ und $R_0 = 9,6$ für den Außenradius des Spannrings erhält man $X_A = 0,15$, $Y_A = 0,0866$ und $R_A = 9,75$.

Der Hals 2 des Mutternkörpers 5 weist dieselbe Anzahl von Nocken in Form von Kreisprofilen auf, wie der Spannring 4 Nuten zählt, im Ausführungsbeispiel also drei Kreisprofile 20a, 20b, 20c. Anders als beim Spannring 4 erstrecken sich die Kreisprofile 20a, 20b, 20c des Halses 2 über einen kleineren Winkelbereich, im Ausführungsbeispiel 45°. Der Winkelbereich kann 30 bis 60° betragen. Die Steigung der Kreisprofile 20a, 20b, 20c hängt von den Abmessungen des Halses 2 ab und ist durch einen Kreisbogen hergestellt, dessen Mittelpunkt gegenüber dem Mittelpunkt der Sicherungsmutter 1 verschoben ist. Die Berechnung des Kreisbogens kann mit den folgenden Formeln (IV), (V), (VI) vorgenommen werden:

$$(IV) \qquad X_I = - (\sqrt{2} + 1) \times g$$

$$(V) \qquad Y_I = (\sqrt{2} + 1) \times g$$

$$(VI) \qquad R_I = R_0 + X_I$$

mit

$$R_0 = \text{Nennradius}, \quad g = \text{Steigung}$$

Mit $g = 0,3$ und $R_0 = 9,5$ für den Innenradius des Halses 2 erhält man $X_I = -0,7243$, $Y_I = 0,7243$ und $R_i = 8,7757$.

Der Außendurchmesser des Halses 2 ist also vorzugsweise etwas geringer als der Innendurchmesser des Spannrings 4, so dass die Differenz einen gewissen Spielraum zum Fügen0 der Teile liefert; im Ausführungsbeispiel beträgt der Außendurchmesser des Halses 2 19 mm. Im Ausführungsbeispiel, mit einem Innendurchmesser von 17 mm und einem Außendurchmesser von 19 mm, beträgt die maximale Höhe der Kreisprofile 20a, 20b, 20c 0,3 mm bei einem Weg über etwa 7,5 mm. Dabei ist es von Vorteil, wenn die Stärke der Wand 2' des Halses 2 höchstens 1/10 des Innendurchmessers beträgt. Diese geringe Wandstärke erlaubt eine elastische Verformung des Halses 2.

Figur 1 zeigt ein Ausführungsbeispiel der erfindungsgemäßen Sicherungsmutter 1, bei dem jeder der am Spannring 4 vorgesehenen Kreiskeile 10a, 10b, 10c einen Rastbereich 11a, 11b, 11c aufweist. Jedes am Hals 2 des Muttern körpers 5 ausgebildete Kreisprofil 20a, 20b, 20c weist zwei Vertiefungen 21 a, 22a; 21 b, 22b; 21 c, 22c auf. Bei dem in Figur 2 gezeigten Ausführungsbeispiel sind die Verhältnisse genau umgekehrt. Hier weisen die am Spannring 4 vorgesehenen Kreiskeile 10a, 10b, 10c jeweils zwei Vertiefungen 13a, 14a; 13b, 14b; 13c, 14c auf. Die am Hals 2 des Mutternkörpers 5 ausgebildeten Kreisprofile 20a, 20b 20c weisen jeweils einen Rastbereich 23a, 23b, 23c auf. Selbstverständlich kann die Zahl der Rastbereiche und Vertiefungen frei gewählt werden.

Die Rastbereiche 11a, 11b, 11c; 23a, 23b, 23c und die Vertiefungen 21 a, 22a; 21 b, 22b; 21 c, 22c; 13a, 14a; 13b, 14b; 13c, 14c stellen Mittel dar, die bei auf dem Mutternkörper 5 fixiertem Spannring 4 miteinander in Eingriff stehen. In den gezeigten Ausführungsbeispielen wird dadurch eine Verrastung gebildet. Selbstverständlich können die Mittel auch so ausgestaltet sein, dass andere Formen der Eingriffswirkung erzielt werden, und zwar auch irreversible Eingriffswirkungen wie bspw. eine Verriegelung. In dem Moment, in dem die Mittel miteinander in Eingriff kommen und die Endposition des Spannrings 4 relativ zum Mutternkörper 5 erreicht ist, erfolgt eine minimalen Reduzierung der Klemmkraft, die für die gewünschte Klemmwirkung unschädlich ist. Ferner wird eine zusätzliche Sicherung der Klemmverbindung erreicht, indem neben dem Reibschluss zwischen Kreiskeilen 10a, 10b, 10c und Kreisprofilen 20a, 20b, 20c noch ein gewisser Formschluss gebildet wird. Dabei kann die Dimensionierung der Rastbereiche und Vertiefungen den Erfordernissen des Einzelfalls angepasst werden.

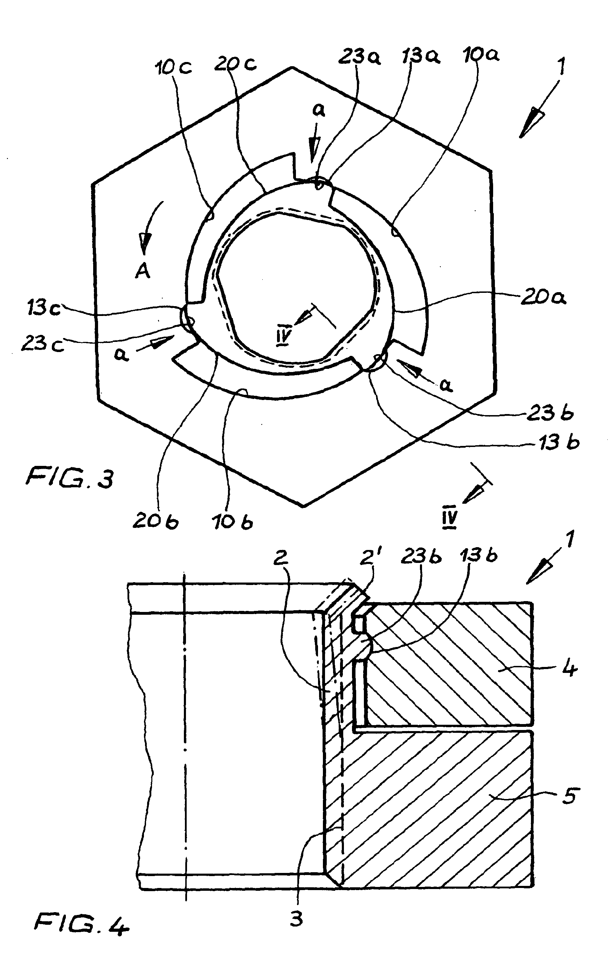

Wie die Figuren 3 und 4 zeigen, wird der Spannring 4 so auf den Hals 2 geschoben, dass die erhabenen Kreisprofile 20a, 20b, 20c des Halses 2 mit den hohlen Kreiskeilen 10a, 10b, 10c des Spannrings zur Deckung kommen. Der Spannring 4 sitzt, auch aufgrund der Differenz zwischen Außendurchmesser des Halses 2 und Innendurchmesser des Spannrings 4 mit einem gewissen Fügespiel auf dem Hals 2 auf und kann frei gedreht werden, und zwar so weit, bis nach dem Ausgleich des Fügespiels die Kreisprofile 20a, 20b, 20c des Halses 2 an den Flächen der Kreiskeile 10a, 10b, 10c des Spannrings 4 anliegen. Beispielsweise erfolgt bei einem Fügespiel von 0,1 mm und einer Steigung der Kreiskeile 10a, 10b, 10c bzw. Kreisprofile 20a, 20b, 20c von 0,3 mm auf 120° die Anlage nach einer Drehung um 40°. Erst dann setzt mit der weiteren Drehung des Spannrings 4 der eigentliche Klemmeffekt ein. Wenn die gewünschte Klemmwirkung erreicht ist, greifen die Rastbereiche 23a, 23b, 23c in die ihnen jeweils zugeordneten Vertiefungen 13a, 13b, 13c ein. Die so erhaltene Verrastung bewirkt eine minimale Reduzierung der Klemmkraft, die für die gewünschte Klemmwirkung unschädlich ist. Dies gilt insbesondere dann, wenn mittels der Abmessungen der Kreiskeile 10a, 10b, 10c und Kreisprofile 20a, 20b, 20c unmittelbar vor der Verrastung eine geringfügige Überhöhung der Klemmkraft bewirkt wird. Wenn, wie in den Figuren 1 und 2 dargestellt, jedem Rastbereich zwei oder mehrere Vertiefungen zugeordnet sind, können mehrere Rastpositionen eingestellt werden, die unterschiedlichen Klemmkräften zugeordnet sind. Damit erhält die erfindungsgemäße Sicherungsmutter 1 eine größere Variabilität und kann vielfältiger eingesetzt und besser an die Anforderungen des Einzelfalls angepasst werden.

Wie aus Figur 3 ersichtlich ist, ist die vom Spannring 4 ausgeübte Klemmwirkung punktuell, nämlich im Bereich der die Kreisprofile 20a, 20b, 20c begrenzenden Kanten. Die Klemmwirkung auf den Hals 2 hat zur Folge, dass dieser leicht abgeflacht wird und die ehemals kreisrunde Kontur des Innendurchmessers etwa dreiecksförmig wird. Damit wird in den abgeflachten Bereichen das Innengewinde 3 an die Achse, den Bolzen, die Welle, die Schraube etc gepresst, auf welche die Sicherungsmutter 1 vor dem Anziehen des Spannrings 4 aufgeschraubt wurde. Auf diese Weise wird der Hals 2 mit der Achse, dem Bolzen, der Welle, der Schraube etc. verklemmt und gegen Lockerung oder Verlust gesichert. Diese Sicherung kann wieder rückgängig gemacht werden, indem der Spannring 4 in Richtung des Pfeils A in Figur 3 gedreht wird. Der elastische Hals 2 nimmt wieder seine in den Figuren 1 und 2 dargestellte kreisförmige Kontur an.

Aus Figur 3 ist die beschriebene elastische Verformung des Halses 2 in drei Punkten bzw. der Verlauf der Kontur des Spannrings 4 und des Halses 2 erkennbar. Die Innenkontur des Spannrings 4 verläuft im Wesentlichen linear, dies entspricht einem hohlen Kreiskeil 10a des Spannrings 4, der sich über den gesamten dargestellten Bereich von 120° erstreckt. Der Verlauf der Außenkontur des Halses 2 entspricht einem Kreisprofil 20a des Halses 2, der sich lediglich über einen Winkelbereich von 45° erstreckt. Die Kontur der Kreisprofile 20a, 20b, 20c des Halses 2 ist vor dem Anziehen kreisbogenförmig, weil die Konturen durch einen Kreisbogen nach den Formeln (IV), (V), (VI) hergestellt sind. Diese Kontur ist so berechnet, dass sich nach der Verformung, d.h. nach dem Anziehen des Spannrings 4 und der Verklemmung, eine annähernd lineare Form einstellt, um eine möglichst gleichmäßige, breitere, nicht punktförmige Anlage am im Wesentlichen linearen Profil der Kreiskeile 10a, 10b, 10c des Spannrings 4 zu erhalten. Dadurch werden Spannungsspitzen vermieden. Dabei bleibt die Kontur der Kreiskeile 10a, 10b, 10c des Spannrings 4 aufgrund der größeren Wanddicke des Spannrings 4 im Wesentlichen unverändert.

Bei der Klemmung verformt sich der Hals 2 im Ausführungsbeispiel dergestalt, dass sich ein Bereich abflacht bis zu einem Innenradius von 8,4 mm, woran sich ein gewölbter Bereich mit einem Innenradius von 8,6 mm anschließt. Dies entspricht dem Verlauf eines abgeflachten Flächenbereichs und einer anschließenden Auswölbung des Halses in einem Klemmpunkt, der in Figur 3 mit den Pfeilen a bezeichnet ist. Der Klemmbereich zwischen dem Kreiskeil 10a des Spannrings 4 und dem Kreisprofil 20a des Halses 2 verläuft in einem Winkelbereich etwa zwischen 25 und 50°. In diesem Bereich, in welchem der Hals 2 nach innen abgeflacht ist, findet auch die Klemmung zwischen dem Hals 2 der Sicherungsmutter 1 und der Schraube, der Welle, dem Bolzen, der Achse etc. statt, auf welche die Sicherungsmutter 1 aufgeschraubt ist.

Aus dem oben Gesagten geht hervor, dass die Klemmung bzw. der Sicherungseffekt der erfindungsgemäßen Sicherungsmutter 1 auf der punktuellen elastischen, unrunden Verformung des Halses 2 beruht, die von der kreisrunden Kontur abweicht. Daher ist es nicht zwingend, genau drei Kreiskeile bzw. Kreisprofile am Spannring 4 bzw. am Hals 2 vorzusehen. Auch mit zwei, vier oder fünf Kreiskeilen bzw. Kreisprofilen erhält man noch eine dementsprechende Verformung des Halses 2. Die Obergrenze liegt dort, wo wegen der zu großen Anzahl der Kreiskeile bzw. Kreisprofile keine deutlich unrunde Verformung mehr erhalten wird.

Die erfindungsgemäße Sicherungsmutter 1 kann einfach und kostengünstig hergestellt werden. Der Spannring 4 kann in einem Arbeitsgang durch Pressen hergestellt werden. Dies ist beim Mutternkörper schwieriger, da die Mittelachse des Innengewindes 3 immer senkrecht zur Auflagefläche stehen muss und der Toleranzspielraum hierfür gering ist (im Ausführungsbeispiel 3/100 mm). Eine Möglichkeit zur Herstellung besteht darin, einen Rohling für den Mutternkörper ohne Innengewinde 3 zu pressen, wobei die Wandstärke des Halses 2 deutlich größer ist als beim fertigen Mutternkörper. Der Rohling wird anschließend in einer Aufspannung spanend bearbeitet, d.h. es wird die gewünschte Wandstärke des Halses 2 eingestellt, das Innengewinde 3 erzeugt und die Auflagefläche der Sicherungsmutter erarbeitet. Hierbei kann das Innengewinde 3 auch spanlos geformt werden. Anschließend werden der Mutternkörper 5 und der Spannring 4 zusammen montiert, wobei der überstehende Rand 2' des Halses 2 leicht nach außen gebogen werden kann, um den Spannring 4 verliersicher auf dem Mutternkörper 5 zu halten.

**Patentansprüche**

1. Sicherungsmutter (1) mit einem Mutternkörper (5) mit einem sich axial erstreckenden Hals (2) und einem den Mutternkörper (5) und den Hals (2) durchdringenden Innengewinde (3) und einem auf dem Mutternkörper (5) drehbar angebrachten Spannring (4), der auf dem Mutternkörper (5) durch Klemmung fixierbar ist, wobei die Innenfläche des Spannrings (4) Nuten in Form von Kreiskeilen (10a, 10b, 10c) aufweist, die sich um gleiche Winkel über den gesamten Umfang erstrecken und wobei die Außenfläche des Halses (2) dieselbe Anzahl von Nocken in Form von Kreisprofilen (20a, 20b, 20c) aufweist, die den Kreiskeilen (10a, 10b, 10c) zugeordnet sind und sich jeweils um einen gleichen Winkel erstrecken, der wesentlich kleiner ist als der Winkel des zugeordneten Kreiskeils (10a, 10b, 10c), **dadurch gekennzeichnet, dass** mindestens ein Kreiskeil (10a, 10b, 10c) mindestens einen Rastbereich (11a, 11b, 11c) aufweist und dass mindestens ein Kreisprofil (20a, 20b, 20c) mindestens eine korrespondierende Vertiefung (21a, 21b, 21c; 22a, 22b, 22c) aufweist; bzw. dass mindestens ein Kreiskeil (10a, 10b, 10c) mindestens eine Vertiefung (13a, 13b, 13c; 14a, 14b, 14c) aufweist und dass mindestens ein Kreisprofil (20a, 20b, 20c) mindestens einen korrespondierenden Rastbereich (23a, 23b, 23c) aufweist, die jeweils bei mit dem Mutternkörper (5) verspannten Spannring (4) rastend in Eingriff stehen.

2. Sicherungsmutter nach Anspruch 1, **dadurch gekennzeichnet, dass** der oder die Kreiskeile (10a, 10b, 10c) jeweils mindestens einen Rastbereich (11a, 11b, 11c) und das oder die Kreisprofile (20a, 20b, 20c) jeweils mindestens eine Vertiefung (21a, 22a; 21b, 22b; 21c, 22c) aufweisen.

3. Sicherungsmutter nach Anspruch 1, **dadurch gekennzeichnet, dass** der oder die Kreiskeile (10a, 10b, 10c) jeweils mindestens eine Vertiefung (13a, 14a; 13b, 14b; 13c, 14c) und das oder die Kreisprofile (20a, 20b, 20c) jeweils mindestens einen Rastbereich (23a, 23b, 23c) aufweisen.

4. Sicherungsmutter nach einem der vorhergehenden Ansprüche, **dadurch gekennzeichnet, dass** drei Kreiskeile (10a, 10b, 10c) und drei Kreisprofile (20a, 20b, 20c) vorgesehen sind.

5. Sicherungsmutter nach Anspruch 4, **dadurch gekennzeichnet, dass** sich jeder Kreiskeil (10a, 10b, 10c) des Spannrings (4) über einen Winkelbereich von 120° erstreckt.

6. Sicherungsmutter nach Anspruch 3 oder 4, **dadurch gekennzeichnet, dass** sich jedes Kreisprofil (20a, 20b, 20c) des Halses (2) über einen Winkelbereich von 30 bis 60°, bevorzugt 40 bis 50°, besonders bevorzugt 45° erstreckt.

7. Sicherungsmutter nach einem der vorhergehenden Ansprüche, **dadurch gekennzeichnet, dass** die Steigung der Kreiskeile (10a, 10b, 10c) annähernd linear ist.

8. Sicherungsmutter nach einem der vorhergehenden Ansprüche, **dadurch gekennzeichnet, dass** die Steigung der Kreisprofile (20a, 20b, 20c) vor der Verklemmung bogenförmig ist.

9. Sicherungsmutter nach einem der vorhergehenden Ansprüche, **dadurch gekennzeichnet, dass** die Steigung der Kreisprofile (20a, 20b, 20c) nach der Verklemmung annähernd linear ist.

10. Sicherungsmutter nach einem der Ansprüche 6 bis 8, **dadurch gekennzeichnet, dass** die Steigung der Kreiskeile (10a, 10b, 10c) und/oder Kreisprofile (20a, 20b, 20c) durch einen Kreisbogen erzeugt ist.

11. Sicherungsmutter nach einem der Ansprüche 6 bis 9, **dadurch gekennzeichnet, dass** die Steigung der Kreiskeile (10a, 10b, 10c) des Spannrings (4) 1: 50 bis 1: 100, vorzugsweise 1 :70 beträgt.

12. Sicherungsmutter nach einem der Ansprüche 6 bis 10, **dadurch gekennzeichnet, dass** die Steigung der Kreisprofile (20a, 20b, 20c) des Halses (2) 1:20 bis 1: 40, vorzugsweise 1: 25 beträgt.

13. Sicherungsmutter nach einem der vorhergehenden Ansprüche, **dadurch gekennzeichnet, dass** die Wandstärke des Halses (2) höchstens 10% des Innendurchmessers des Halses (2) entspricht.

**14.** Sicherungsmutter nach einem der vorhergehenden Ansprüche, **dadurch gekennzeichnet, dass** die Tiefe der Kreiskeile (10a, 10b, 10c) des Spannrings (4) und der Kreisprofile (20a, 20b, 20c) des Halses (2) 1 bis 3 %, vorzugsweise 1,75 %, des Innendurchmessers des Spannrings (4) beträgt.

**Claims**

**1.** A lock nut (1) having a nut body (5) with an axially extending neck (2) and an internal thread (3) penetrating the nut body (5) and the neck (2) and a clamping ring (4) rotatably attached on the nut body (5) which can be fixed on the nut body (5) through clamping, wherein the inner surface of the clamping ring (4) comprises grooves in the shape of circular wedges (10a, 10b, 10c) which extend over the entire circumference by same angles and wherein the outer surface of the neck (2) comprises the same number of cams in the shape of circular profiles (20a, 20b, 20c) which are associated with the circular wedges (10a, 10b, 10c) and each of which extend by a same angle which is substantially smaller than the angle of the associated circular wedge (10a, 10b, 10c), **characterized in that** at least one circular wedge (10a, 10b, 10c) comprises at least one latching region (11a, 11b, 11c) and **in that** at least one circular profile (20a, 20b, 20c) comprises at least one corresponding depression (21a, 21b, 21c; 22a, 22b, 22c); or **in that** at least one circular wedge (10a, 10b, 10c) comprises at least one depression (13a, 13b, 13c; 14a, 14b, 14c) and **in that** at least one circular profile (20a, 20b, 20c) comprises at least one corresponding latching region (23a, 23b, 23c) each of which are in latching engagement with the nut clamping ring (4) clamped to the nut body (5).

**2.** The lock nut according to Claim 1, **characterized in that** the circular wedge or wedges (10a, 10b, 10c) each comprise at least one latching region (11a, 11b, 11c) and the circular profile or profiles (20a, 20b, 20c) each comprise at least one depression (21a, 22a; 21b, 22b; 21c, 22c).

**3.** The lock nut according to Claim 1, **characterized in that** the circular wedge or wedges (10a, 10b, 10c) each comprise at least one depression (13a, 14a; 13b, 14b; 13c, 14c) and the circular profile or profiles (20a, 20b, 20c) each comprise at least one latching region (23a, 23b, 23c).

**4.** The lock nut according to any one of the preceding Claims, **characterized in that** three circular wedges (10a, 10b, 10c) and three circular profiles (20a, 20b, 20c) are provided.

**5.** The lock nut according to Claim 4, **characterized in that** each circular wedge (10a, 10b, 10c) of the clamping ring (4) extends over an angular region of 120°.

**6.** The lock nut according to Claim 3 or 4, **characterized in that** each circular profile (20a, 20b, 20c) of the neck (2) extends over an angular region of 30° to 60°, preferably 40° to 50°, particularly preferably 45°.

**7.** The lock nut according to any one of the preceding Claims, **characterized in that** the pitch of the circular wedges (10a, 10b, 10c) is approximately linear.

**8.** The lock nut according to any one of the preceding Claims, **characterized in that** the pitch of the circular profiles (20a, 20b, 20c) prior to the clamping is arc-shaped.

**9.** The lock nut according to any one of the preceding Claims, **characterized in that** the pitch of the circular profiles (20a, 20b, 20c) after the clamping is approximately linear.

**10.** The lock nut according to any one of the Claims 6 to 8, **characterized in that** the pitch of the circular wedges (10a, 10b, 10c) and/or circular profiles (20a, 20b, 20c) is created by an arc of a circle.

**11.** The lock nut according to any one of the Claims 6 to 9, **characterized in that** the pitch of the circular wedges (10a, 10b, 10c) of the clamping ring (4) amounts to 1:50 to 1:100, preferentially 1:70.

**12.** The lock nut according to any one of the Claims 6 to 10, **characterized in that** the pitch of the circular profiles (20a, 20b, 20c) of the neck (2) amounts to 1:20 to 1:40, preferentially 1:25.

**13.** The lock nut according to any one of the preceding Claims, **characterized in that** the wall thickness of the neck (2) corresponds to a maximum of 10% of the inner diameter of the neck (2).

**14.** The lock nut according to any one of the preceding Claims, **characterized in that** the depth of the circular wedges (10a, 10b, 10c) of the clamping ring (4) and the circular profiles (20a, 20b, 20c) of the neck (2) amounts to 1% to 3%, preferentially 1.75% of the inner diameter of the clamping ring (4).

**Revendications**

**1.** Ecrou de blocage (1) comprenant un corps d'écrou (5) avec un collet (2) s'étendant axialement et un alésage intérieur (3) traversant le corps d'écrou (5) et le collet (2), et une bague de serrage (4) placée de manière rotative sur le corps d'écrou (5), laquelle peut être fixée par blocage sur le corps d'écrou (5), sachant que la surface intérieure de la bague de serrage (4) présente des rainures en forme de biseaux circulaires (10a, 10b, 10c) qui s'étendent sur des mêmes angles autour de toute la périphérie et sachant que la surface extérieure du collet (2) présente le même nombre de cames en forme de profilés circulaires (20a, 20b, 20c) qui sont attribués aux biseaux circulaires (10a, 10b, 10c) et s'étendent respectivement sur un même angle essentiellement plus petit que l'angle du biseau circulaire (10a, 10b, 10c) attribué, **caractérisé en ce qu'**au moins un biseau circulaire (10a, 10b, 10c) présente au moins une zone d'encliquetage (11a, 11b, 11c) et **en ce qu'**au moins un profilé circulaire (20a, 20b, 20c) présente au moins un renfoncement (21a, 21b, 21c ; 22a, 22b, 22c) correspondant, respectivement que l'au moins un biseau circulaire (10a, 10b, 10c) comprend au moins un renfoncement (13a, 13b, 13c ; 14a, 14b, 14c) et **en ce qu'**au moins un profilé circulaire (20a, 20b, 20c) présente au moins une zone d'encliquetage correspondante (23a, 23b, 23c), lesquelles sont respectivement en prise par encliquetage avec la bague de serrage (4) bloquée avec le corps d'écrou (5).

**2.** Ecrou de blocage selon la revendication 1, **caractérisé en ce que** le ou les biseau(s) circulaire(s) (10a, 10b, 10c) présente(nt) au moins une zone d'encliquetage (11a, 11b, 11c) et que le ou les profilé(s) circulaire(s) (20a, 20b, 20c) présente(nt) au moins un renfoncement (21a, 21b, 21c ; 22a, 22b, 22c).

**3.** Ecrou de blocage selon la revendication 1, **caractérisé en ce que** le ou les biseau(s) circulaire(s) (10a, 10b, 10c) présente(nt) respectivement au moins un renfoncement (13a, 13b, 13c ; 14a, 14b, 14c) et que le ou les profilé(s) circulaire(s) (20a, 20b, 20c) présente(nt) respectivement au moins une zone d'encliquetage (23a, 23b, 23c).

**4.** Ecrou de blocage selon l'une des revendications précédentes, **caractérisé en ce que** trois biseaux circulaires (10a, 10b, 10c) et trois profilés circulaires (20a, 20b, 20c) sont prévus.

**5.** Ecrou de blocage selon la revendication 4, **caractérisé en ce que** chaque biseau circulaire (10a, 10b, 10c) de la bague de serrage (4) s'étend sur une plage angulaire de 120°.

**6.** Ecrou de blocage selon la revendication 3 ou 4, **caractérisé en ce que** chaque profilé circulaire (20a, 20b, 20c) du collet (2) s'étend sur une plage angulaire de 30 à 60°, de préférence 40 à 50°, de manière particulièrement préférée de 45°.

**7.** Ecrou de blocage selon l'une des revendications précédentes, **caractérisé en ce que** l'inclinaison des biseaux circulaires (10a, 10b, 10c) est pratiquement linéaire.

**8.** Ecrou de blocage selon l'une des revendications précédentes, **caractérisé en ce que** l'inclinaison des profilés circulaires (20a, 20b, 20c) sont arqués avant le blocage.

**9.** Ecrou de blocage selon l'une des revendications précédentes, **caractérisé en ce que** l'inclinaison des profilés circulaires (20a, 20b, 20c) est presque linéaire après le blocage.

**10.** Ecrou de blocage selon l'une des revendications 6 à 8, **caractérisé en ce que** l'inclinaison des biseaux circulaires (10a, 10b, 10c) et/ou des profilés circulaires (20a, 20b, 20c) est produite par un arc de cercle.

**11.** Ecrou de blocage selon l'une des revendications 6 à 9, **caractérisé en ce que** l'inclinaison des biseaux circulaires (10a, 10b, 10c) de la bague de serrage (4) est de 1:50 à 1:100, de préférence de 1:70.

**12.** Ecrou de blocage selon l'une des revendications 6 à 10, **caractérisé en ce que** l'inclinaison des profilés circulaires (20a, 20b, 20c) du collet (2) est de 1:20 à 1:40, de préférence de 1:25.

13. Ecrou de blocage selon l'une des revendications précédentes, **caractérisé en ce que** l'épaisseur de paroi du collet (2) correspond au plus à 10% du diamètre intérieur du collet (2).

14. Ecrou de blocage selon l'une des revendications précédentes, **caractérisé en ce que** la profondeur des biseaux circulaires (10a, 10b, 10c) de la bague de serrage (4) et des profilés circulaires (20a, 20b, 20c) du collet (2) est de 1 à 3%, de préférence de 1,75%, du diamètre intérieur de la bague de serrage (4).

FIG.1

FIG.2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10144034 A1
- EP 1069325 A2